# FASCICULE DE BREVET EUROPEEN

(11) **EP 4 187 128 B1**
(45) Date de publication et mention de la délivrance du brevet: **28.08.2024**
(21) Numéro de dépôt: 22193228.8
(22) Date de dépôt: 31.08.2022
(51) Int. Cl.: F16H 57/04, B64C 27/12

(54) **ENSEMBLE COMPORTANT UN COLLECTEUR DE LIQUIDE DE LUBRIFICATION ET UN MANETON, TRAIN EPICYCLOÏDAL D'ENGRENAGES COMPORTANT UN TEL ENSEMBLE, BOITE DE TRANSMISSION DE PUISSANCE ET AERONEF**
BAUEINHEIT AUFWEISEND EINEN SCHMIERFLÜSSIGKEITSSAMMLER UND EINEN PLANETENBOLZEN, PLANETENGETRIEBE AUFWEISEND EINE SOLCHE BAUEINHEIT, GETRIEBE UND LUFTFAHRZEUG
ASSEMBLY OF A COLLECTOR OF LUBRICATING LIQUID AND A PLANET PIN, EPICYCLIC GEARBOX COMPRISING SUCH AN ASSEMBLY, GEARBOX AND AIRCRAFT

(30) Priorité: 30.11.2021 FR 2112701
(43) Date de publication de la demande: 31.05.2023
(73) Titulaire: Airbus Helicopters, 13725 Marignane Cedex (FR)
(72) Inventeur: CHARRIER, Mathieu, 13006 MARSEILLE (FR); BELMONTE, Jérôme, 13100 AIX EN PROVENCE (FR); ESCOFFIER, Adrien, 13760 SAINT-CANNAT (FR); ROBERT, Sébastien, 13240 SEPTEMES LES VALLONS (FR); MALTINTI, Maxime, 13220 CHATEAUNEUF LES MARTIGUES (FR)
(74) Mandataire: GPI Brevets

(56) Documents cités:
- EP-A1- 3 964 734
- DE-A1- 102012 217 307
- FR-A1- 3 098 562
- US-A1- 2016 290 480

## Description

La présente invention se situe dans le domaine de la lubrification des systèmes à engrenages, et notamment des boîtes de transmission de puissance d'un aéronef à voilure tournante.

La présente invention concerne un ensemble. La présente invention concerne également un train épicycloïdal d'engrenages équipé d'un tel ensemble, une boîte de transmission de puissance munie d'un tel train épicycloïdal d'engrenages ainsi qu'un aéronef muni d'une telle boîte de transmission de puissance. Un train épicycloïdal d'engrenages permet de fournir un grand rapport de réduction de la vitesse de rotation entre un arbre d'entrée et un arbre de sortie. Un train épicycloïdal d'engrenages peut être un composant d'un système mécanique tel que par exemple une boîte de vitesse d'un véhicule, notamment d'un aéronef.

Un train épicycloïdal d'engrenages peut comporter une roue planétaire dentée, une couronne externe dentée, un porte-satellites et plusieurs roues dentées formant des roues-satellites qui sont portées par le porte-satellites. Les dents des roues-satellites sont en prise à la fois avec des dents de la roue planétaire et avec des dents de la couronne externe. Selon l'utilisation du train épicycloïdal d'engrenages, la roue planétaire, le porte-satellites ou la couronne externe sont solidaires de l'arbre d'entrée ou de l'arbre de sortie. Par exemple, la couronne externe est fixe, la roue planétaire étant solidaire de l'arbre d'entrée et le porte-satellites étant solidaire de l'arbre de sortie.

Le porte-satellites peut comporter un support portant des manetons. Les manetons et le support peuvent former une seule et même pièce ou bien les manetons peuvent être rapportés et fixés rigidement au support.

Un train épicycloïdal d'engrenages comporte aussi des dispositifs de guidage en rotation des différents éléments tournants, par exemple de la roue planétaire, du porte-satellites et des roues-satellites. Un dispositif de guidage en rotation peut par exemple comporter un palier lisse ou un ou plusieurs paliers à éléments roulants, tels que des roulements à billes, à rouleaux ou encore à aiguilles. Un dispositif de guidage en rotation comporte par exemple une bague intérieure, une bague extérieure et des éléments roulants agencés entre la bague intérieure et la bague extérieure. Par souci de simplification, un tel dispositif de guidage en rotation est désigné plus simplement « dispositif de guidage » par la suite.

Un train épicycloïdal d'engrenages est généralement lubrifié par un système de lubrification afin de limiter notamment l'échauffement et l'usure des éléments de denture et des dispositifs de guidage et, par suite, d'assurer un bon fonctionnement du train épicycloïdal d'engrenages et de prolonger sa durée de vie. Ce système de lubrification permet notamment d'acheminer un liquide de lubrification vers les zones et les éléments à lubrifier, en particulier les éléments de denture et les dispositifs de guidage. Cette lubrification contribue également à l'évacuation de particules métalliques éventuelles issues de l'usure ou de la dégradation normale d'un élément du train épicycloïdal d'engrenages.

L'architecture d'un train épicycloïdal d'engrenages et son fonctionnement imposent souvent une lubrification des dispositifs de guidage des roues-satellites, par exemple depuis une bague intérieure par effet centrifuge. Le liquide de lubrification peut par exemple être dirigé dans chaque maneton supportant une roue-satellite puis est mis sous pression sous l'effet de la force centrifuge afin de traverser la bague intérieure pour lubrifier les éléments roulants du dispositif de guidage de cette roue-satellite.

Toutefois, sous l'effet de vitesses de rotation importantes du porte-satellites et en fonction et de la géométrie du maneton, une partie du liquide de lubrification pourrait être refoulée à l'extérieur du maneton.

En outre, lorsqu'un dispositif de guidage est situé plus haut que les roues-satellites, par exemple un dispositif de guidage du porte-satellites, un flux de liquide de lubrification peut s'écouler par gravité pour le traverser, et peut éventuellement atteindre ensuite les dispositifs de guidage des roues-satellites. Ce liquide de lubrification est alors susceptible d'être pollué avant d'atteindre les dispositifs de guidage des roues-satellites.

De façon complémentaire, un autre flux de liquide de lubrification peut être dirigé directement vers les manetons à partir d'asperseurs ou de gicleurs fixes par rapport au bâti du système mécanique. Dans ce cas, un déflecteur peut être intégré au-dessus des dispositifs de guidage des roues-satellites dans le train épicycloïdal d'engrenages pour orienter ce flux de liquide de lubrification vers les dispositifs de guidage des roues-satellites et également limiter la quantité de liquide de lubrification utilisé.

Un train épicycloïdal peut également comporter une coupelle destinée à alimenter en liquide de lubrification des paliers et des engrenages comme décrit dans le document US 2018/0258794. Le liquide de lubrification provient d'un unique moyen d'aspersion fixe. La coupelle est solidaire du porte-satellites et a une forme annulaire autour d'un axe de rotation du porte-satellites. La coupelle comporte une succession circonférentielle de cuvettes séparées par des parois et reliées respectivement à des canalisations de longueurs différentes et agencées radialement. Les canalisations permettent ainsi d'alimenter en liquide de lubrification les paliers des roues-satellites ainsi que les dents des roues-satellites, de la couronne externe ou du planétaire. Le liquide de lubrification peut passer d'une cuvette à une cuvette adjacente lorsque la quantité de liquide de lubrification dépasse la hauteur des parois de la cuvette.

Le document EP 3964734, qui relève de l'article 54(3) de la CBE, décrit un dispositif de séparation et de collecte de deux flux d'un liquide de lubrification pour un train épicycloïdal d'engrenages. Un liquide de lubrification est dirigé vers un premier dispositif de guidage en rotation d'un porte-satellites du train épicycloïdal d'engrenages et vers des seconds dispositifs de guidage en rotation de roues-satellites du train épicycloïdal d'engrenages. Le dispositif de séparation et de collecte permet alors d'une part d'acheminer un premier flux du liquide de lubrification vers des seconds dispositifs de guidage du train épicycloïdal d'engrenages et d'autre part d'acheminer un deuxième flux du liquide de lubrification s'écoulant par gravité depuis le premier dispositif de guidage entre deux roues-satellites évitant de la sorte le mélange de ces deux flux.

L'arrière plan technologique de l'invention comporte les documents DE 10 2012 217307, US 2016/0290480 et FR 3098562.

La présente invention a alors pour but de proposer un collecteur de liquide de lubrification pour maneton d'un train épicycloïdal d'engrenages visant notamment à éviter de mélanger deux flux distincts d'un liquide de lubrification afin d'éviter une circulation de liquide de lubrification successivement dans plusieurs dispositifs de guidage en rotation.

La présente invention a par exemple pour objet un ensemble comportant un collecteur de liquide de lubrification, un dispositif de guidage, un maneton portant ledit dispositif de guidage en rotation et un support portant ledit maneton.

Le collecteur est configuré pour recevoir un premier flux et un second flux d'un liquide de lubrification, le premier flux et le second flux étant distincts.

Le collecteur de liquide de lubrification selon l'invention est remarquable en ce qu'il comporte :
- un corps creux autour d'un axe géométrique AX et muni de :
   ∘ un orifice d'entrée configuré pour recevoir le premier flux du liquide de lubrification,
   ∘ un orifice de sortie adapté et configuré pour que le premier flux se dirige vers un dispositif de guidage lié au maneton,
- une barrière configurée pour dévier un second flux du liquide de lubrification, la barrière comportant :
   ∘ un épaulement lié au corps et muni d'une face d'appui, ladite face d'appui étant en appui contre une face externe dudit maneton ou bien contre une face externe dudit support portant ledit maneton, ladite face d'appui s'étendant dans un plan d'appui,
   ∘ un déflecteur situé d'un côté opposé à l'orifice de sortie par rapport au plan d'appui, le déflecteur étant localement en saillie radialement du corps en s'éloignant de l'axe géométrique AX,
   ∘ un espace de déviation du second flux situé entre le déflecteur et le plan d'appui, ledit déflecteur couvrant un angle supérieur ou égal à 100 autour dudit axe géométrique.

Un premier flux du liquide de lubrification est dirigé par exemple par injection ou pulvérisation vers l'orifice d'entrée du collecteur de liquide par l'intermédiaire d'un dispositif de projection du liquide de lubrification, tel un orifice, un asperseur, un gicleur ou tout moyen équivalent, afin de remplir au moins partiellement le collecteur avec le liquide de lubrification. Le liquide de lubrification est acheminé par exemple par gravité, et éventuellement sous l'effet d'une force centrifuge si le maneton est en rotation, dans une zone inférieure du maneton par l'intermédiaire de l'orifice de sortie. Le maneton peut comporter un ou plusieurs orifices radiaux sur une de ses parois afin que le premier flux du liquide de lubrification soit alors dirigé vers un organe à lubrifier et/ou à refroidir, tel un dispositif de guidage en rotation, positionné par exemple autour du maneton.

Le premier flux arrivant directement d'un dispositif de projection du liquide de lubrification est propre et non pollué. Un second flux du liquide de lubrification peut par contre avoir été utilisé pour lubrifier et/ou refroidir un autre organe. Ce second flux peut alors avoir été par exemple réchauffé et être de fait moins efficace pour lubrifier et/ou refroidir un organe. Ce second flux peut aussi être pollué.

La face d'appui de l'épaulement est en appui contre une face externe du maneton ou bien contre une face externe d'un support portant le maneton. La face d'appui de l'épaulement évite ainsi que le second flux du liquide de lubrification, ou au minimum des particules étrangères qu'il comporte, ne pénètrent dans le maneton au niveau de la jonction de cette face d'appui avec une face externe du maneton ou bien une face externe d'un support portant le maneton.

Le déflecteur est une face de la barrière qui s'étend au moins radialement en saillie à l'extérieur et en périphérie du corps, de sorte à délimiter un espace de déviation avec le plan d'appui et l'épaulement voire une partie du corps. Cet espace de déviation est ouvert radialement sur l'extérieur du collecteur, en s'éloignant de l'axe géométrique AX. Le terme « radialement » s'entend au regard de l'axe géométrique AX. Cet espace de déviation est destiné à accumuler et orienter autour du collecteur le second flux du liquide de lubrification qui est distinct du premier flux.

La barrière permet ainsi de canaliser et de dévier le second flux et également d'éviter que le second flux ne pénètre dans le corps creux du collecteur. Le second flux du liquide de lubrification peut ainsi être évacué, sans circuler à travers le collecteur selon l'invention, ni par suite à travers l'organe à lubrifier et/ou à refroidir.

L'ensemble selon l'invention permet ainsi avantageusement d'éviter de mélanger le premier et le second flux de liquide de lubrification et donc de mélanger un flux de liquide de lubrification propre avec un flux possiblement pollué ou réchauffé. L'ensemble selon l'invention permet également d'évacuer le second flux en évitant qu'il soit introduit dans le collecteur.

L'ensemble selon l'invention peut comporter les caractéristiques qui suivent, prises selon les revendications dépendantes.

De préférence, le déflecteur peut couvrir un angle supérieur ou égal à 270° autour de l'axe géométrique AX.

En outre, la barrière dans sa totalité, à savoir le déflecteur et l'épaulement, peut éventuellement couvrir un tel angle limité autour de l'axe géométrique AX en périphérie du corps.

Alternativement, le déflecteur et l'épaulement peuvent couvrir des angles limités différents autour de l'axe géométrique AX en périphérie du corps. Par exemple, l'épaulement couvre un premier angle limité supérieur à un second angle limité couvert par le déflecteur.

Alternativement, la barrière dans sa totalité, à savoir le déflecteur et l'épaulement, peut couvrir en totalité la périphérie du corps autour de l'axe géométrique AX, à savoir un angle de 360° autour de l'axe géométrique AX. La barrière est ainsi de forme annulaire. En conséquence, le déflecteur et l'épaulement sont également de formes annulaires.

Selon un autre exemple, le plan d'appui est perpendiculaire à l'axe géométrique AX. L'axe géométrique AX est par exemple un axe de symétrie d'au moins une partie du corps creux lorsqu'il est par exemple au moins en partie cylindrique à base circulaire.

Selon un autre exemple, le déflecteur peut être parallèle au plan d'appui. Le déflecteur comporte notamment une face en regard du plan d'appui et parallèle à ce plan d'appui.

Alternativement, le déflecteur peut être non parallèle au plan d'appui et comporter ainsi une face inclinée par rapport à la face d'appui. De préférence, l'angle de déflection entre le plan d'appui et le déflecteur peut être compris entre 15° et 45° afin de limiter l'encombrement de la barrière.

Cependant, cet angle de déflection peut être supérieur à 45°, voire être supérieur ou égal à 90° lorsque l'espace disponible au-dessus du maneton le permet.

Selon un autre exemple, l'espace de déviation peut être limité selon une direction parallèle à l'axe géométrique AX d'une part par le déflecteur et d'autre part par le plan d'appui et radialement, par rapport à l'axe géométrique AX, par l'épaulement en direction de l'axe géométrique AX. L'espace de déviation est ouvert radialement vers l'extérieur en s'éloignant de l'axe géométrique AX.

Alternativement, l'espace de déviation peut être limité selon une direction parallèle à l'axe géométrique AX d'une part par le déflecteur et d'autre part par le plan d'appui et radialement, par rapport à l'axe géométrique AX, par l'épaulement et le corps en direction de l'axe géométrique AX. L'espace de déviation est ouvert radialement vers l'extérieur en s'éloignant de l'axe géométrique AX.

Alternativement, l'espace de déviation peut être limité selon une direction parallèle à l'axe géométrique AX d'une part par le déflecteur et d'autre part par l'épaulement et/ou le plan d'appui et radialement, par rapport à l'axe géométrique AX, par le corps en direction de l'axe géométrique AX. L'espace de déviation est ouvert radialement vers l'extérieur en s'éloignant de l'axe géométrique AX.

Selon un autre exemple, le collecteur peut comporter une paroi anti-refoulement pour maintenir un volume de liquide de lubrification dans le corps creux. La paroi anti-refoulement permet de bloquer une partie du liquide de lubrification et de maintenir ainsi un volume minimum de liquide de lubrification dans le corps creux en fonction des mouvements et/ou des accélérations subis par le collecteur. En conséquence, l'organe à lubrifier et/ou à refroidir peut être alimenté constamment en liquide de lubrification.

La paroi anti-refoulement est liée au corps creux. La paroi anti-refoulement peut par exemple être agencée à l'intérieur du corps creux et liée à une paroi intérieure du corps creux.

La paroi anti-refoulement peut être de forme annulaire et centrée sur l'axe géométrique AX. L'orifice d'entrée est alors formé par une ouverture au centre de la paroi anti-refoulement.

La paroi anti-refoulement peut être liée à une paroi intérieure du corps creux et l'orifice d'entrée est alors formé par une ouverture entre la paroi anti-refoulement et une paroi du corps creux. La paroi anti-refoulement est ainsi asymétrique autour de l'axe géométrique AX. La position du collecteur peut alors être indexée par rapport au maneton pour maintenir efficacement le volume minimum de liquide de lubrification dans le corps creux en fonction des mouvements et/ou des accélérations subis par le collecteur. Le collecteur et le maneton peuvent comporter un dispositif d'indexage, tel que précédemment évoqué, permettant d'orienter précisément le collecteur dans le maneton.

Selon un autre exemple, le corps creux peut comporter des ouvertures de déformation en forme de fentes agencées sur une paroi du corps creux entre l'orifice d'entrée et l'orifice de sortie, le collecteur comportant au moins un support de fixation configuré pour fixer le collecteur au maneton à l'aide d'au moins un dispositif de fixation. Ledit au moins un support de fixation est lié au corps creux. Le collecteur est dimensionné de sorte qu'en fixant le collecteur au maneton à l'aide d'au moins un support de fixation et d'au moins un dispositif de fixation, le corps creux se déforme et s'allonge grâce aux ouvertures de déformation afin que la face d'appui de l'épaulement de la barrière exerce une pression sur une face externe du maneton ou une face externe d'un support portant le maneton. Cette pression permet d'assurer une étanchéité entre d'une part le collecteur, et en particulier sa barrière, et d'autre part le maneton ou le support portant le maneton afin d'empêcher au minimum que des particules étrangères contenues dans le second flux du liquide de lubrification pénètrent dans le maneton, voire que ce second flux pénètre dans le maneton.

Les ouvertures de déformation doivent être non parallèles à l'axe géométrique AX pour contribuer à la déformation en traction selon l'axe géométrique AX du corps creux. Les fentes peuvent par exemple être agencées dans des plans perpendiculaires à l'axe géométrique AX.

La présente invention vise également un train épicycloïdal d'engrenages comportant un porte-satellites et plusieurs roues-satellites dentées portées par le porte-satellites, le porte-satellites comportant ledit support et plusieurs manetons portés par le support,
chaque roue-satellite ayant des dents agencées autour d'un maneton, le train épicycloïdal d'engrenages comportant des dispositifs de guidage en rotation des roues-satellites par rapport aux manetons. Les manetons et le support peuvent former une seule et même pièce.

La face d'appui de chaque collecteur peut être en appui sur une face externe du support ou une face externe d'un maneton parmi les manetons.

L'axe géométrique AX de chaque collecteur peut être confondu avec un axe de révolution AXM du maneton dans lequel le collecteur est agencé.

En outre, lorsque le déflecteur de chaque collecteur couvre un angle strictement inférieur à 360° autour de l'axe géométrique AX, chaque collecteur peut être agencé dans un maneton de sorte que le déflecteur couvre un angle supérieur ou égal à 50° de part et d'autre d'une ligne reliant l'axe géométrique AX et un premier axe de rotation AXROT1 du porte-satellite.

La présente invention vise aussi une boîte de transmission de puissance comportant un tel train épicycloïdal d'engrenages et un système de lubrification.

La boîte de transmission de puissance peut comporter un bâti et un dispositif de guidage principal agencé entre le bâti et le porte-satellites, le bâti comportant un conduit à travers lequel est acheminé le premier flux du liquide de lubrification en direction des collecteurs lors d'une rotation du porte-satellites.

Le système de lubrification distribue le premier flux et un second flux de liquide de lubrification sur le train épicycloïdal d'engrenages, le premier flux étant dirigé vers les collecteurs via le conduit et le second flux étant dirigé vers le dispositif de guidage principal.

La présente invention vise enfin un aéronef comportant une boîte de transmission de puissance telle que précédemment décrite. L'invention et ses avantages apparaîtront avec plus de détails dans le cadre de la description qui suit avec des exemples donnés à titre illustratif en référence aux figures annexées qui représentent :
- la figure 1, une vue en coupe d'un train épicycloïdal d'engrenages muni d'un ensemble selon l'invention,
- la figure 2, une vue schématique de côté d'un aéronef,
- la figure 3, une vue en coupe d'un train épicycloïdal d'engrenages muni d'un ensemble selon l'invention,
- les figures 4 à 6, des vues en coupe d'un maneton et d'un collecteur faisant partie de l'ensemble selon l'invention, et
- les figures 7 à 8, deux vues en perspective d'un porte-satellites portant des collecteurs.

Les éléments présents dans plusieurs figures distinctes sont affectés d'une seule et même référence.

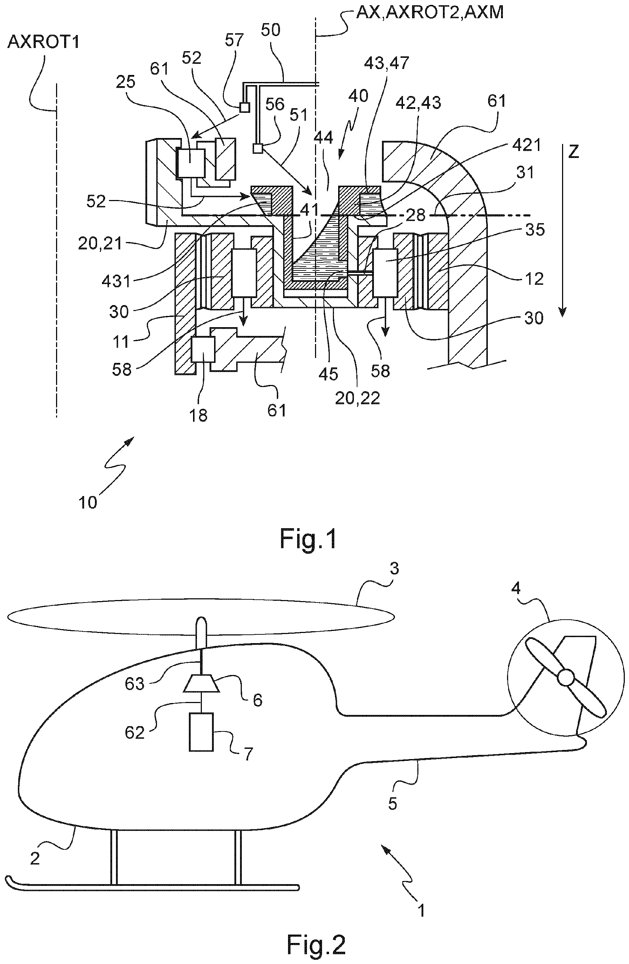

[Fig 1] La figure 1 représente un train épicycloïdal d'engrenages 10 permettant d'obtenir un rapport important de réduction de vitesse de rotation entre un arbre d'entrée et un arbre de sortie.

Un tel train épicycloïdal d'engrenages 10 peut être agencé dans une boîte de transmission de puissance 6 comportant aussi un système de lubrification 50 destiné à lubrifier et/ou à refroidir les éléments tournants de la boîte de transmission de puissance 6 en utilisant un liquide de lubrification tel que de l'huile par exemple. La boîte de transmission de puissance 6 constitue ainsi un système mécanique lubrifié.

[Fig 2] Un tel train épicycloïdal d'engrenages 10 peut être agencé dans une boîte de transmission de puissance 6 d'un aéronef 1 à voilure tournante de type giravion représenté sur la figure 2. Cet aéronef 1 peut comporter un fuselage 2, un rotor principal 3 participant au moins partiellement à la sustentation de l'aéronef 1 et éventuellement un rotor auxiliaire 4 agencé à l'extrémité d'une poutre de queue 5. La boîte de transmission de puissance 6 est entraînée en rotation par une installation motrice 7 munie d'au moins un moteur et entraîne en rotation le rotor principal 3 ainsi qu'éventuellement le rotor auxiliaire 4.

Par exemple et dans ce cadre, la boîte de transmission de puissance 6 comporte d'une part, au moins un arbre d'entrée 62 relié à l'installation motrice 7 et d'autre part, un arbre de sortie 63 relié au rotor principal 3. Un arbre de sortie (non représenté) de la boîte de transmission de puissance 6 peut aussi être relié au rotor auxiliaire 4.

Un tel train épicycloïdal d'engrenages 10 peut alternativement être agencé dans d'autres systèmes mécaniques lubrifiés.

Le train épicycloïdal d'engrenages 10 comporte une roue planétaire 11 dentée, une couronne externe 12 dentée, un porte-satellites 20 et plusieurs roues-satellites 30 dentées portées par le porte-satellites 20.

Le plan de coupe de la figure 1 passe par un premier axe de rotation AXROT1 du porte-satellites 20 et par un second axe de rotation AXROT2 d'une roue-satellite 30, le premier axe de rotation AXROT1 et le second axe de rotation AXROT2 étant parallèles.

Le porte-satellites 20 peut être par exemple solidaire de l'arbre de sortie 63 et la roue planétaire 11 peut être solidaire de l'arbre d'entrée 62 ou bien être solidaire d'un arbre intermédiaire relié à l'arbre d'entrée 62 par des pignons et des engrenages. La couronne externe 12 est selon cet exemple fixe par rapport à la boîte de transmission de puissance 6 et solidaire d'un bâti 61 de la boîte de transmission de puissance 6.

Le porte-satellites 20 comporte un support 21 et plusieurs manetons 22 portés par le support 21. Le porte-satellites 20 est guidé en rotation par rapport au bâti 61 autour du premier axe de rotation AXROT1 par un dispositif de guidage principal 25. Chaque roue-satellite 30 est agencée au moins partiellement autour d'un maneton 22, un axe de révolution AXM de chaque maneton 22 étant confondu avec le second axe de rotation AXROT2. Chaque roue-satellite 30 est guidée en rotation autour du second axe de rotation AXROT2 par un dispositif de guidage 35. La roue planétaire 11 est guidée en rotation par rapport au bâti 61 par un autre dispositif de guidage 18. Chaque dispositif de guidage 18, 25, 35 peut comporter un palier lisse ou un ou plusieurs paliers à éléments roulants tels que des roulements à billes, à rouleaux ou encore à aiguilles par exemple.

La roue planétaire 11 et le porte-satellites 20 sont agencés, selon cet exemple, mobiles en rotation autour du premier axe de rotation AXROT1. De plus, la roue planétaire 11, la couronne externe 12 et le porte-satellites 20 sont coaxiaux selon le premier axe de rotation AXROT1. Chaque roue-satellite 30 comporte des dents coopérant avec des dents de la couronne externe 12 et des dents de la roue planétaire 11. Lorsque l'aéronef 1 est posé sur un sol plat, le premier axe de rotation AXROT1 peut être orienté sensiblement verticalement dans un repère terrestre, à savoir parallèlement à la direction Z de la gravité terrestre.

Quelle que soit l'implantation du train épicycloïdal d'engrenages 10, le système de lubrification 50 a notamment pour fonction de lubrifier le train épicycloïdal d'engrenages 10. En particulier, le système de lubrification 50 lubrifie les dispositifs de guidage 35 en injectant un premier flux 51 du liquide de lubrification et le dispositif de guidage principal 25 en injectant un second flux 52 du liquide de lubrification.

Le train épicycloïdal d'engrenages 10 comporte également des collecteurs 40 selon l'invention, un collecteur 40 étant agencé dans chaque maneton 22.

Quelle que soit la nature du système mécanique muni d'un tel collecteur 40, le collecteur 40 comporte un corps 41 creux muni d'un orifice d'entrée 44 et d'un orifice de sortie 45. Le collecteur 40 comprend une barrière 43 munie d'un épaulement 42 et d'un déflecteur 47. Le déflecteur 47 est situé d'un côté opposé à l'orifice de sortie 45 par rapport à un plan d'appui 31, et est agencé au moins localement en saillie du corps 41 radialement au regard de l'axe géométrique AX en s'éloignant de cet axe géométrique AX. La barrière 43 délimite un espace de déviation 431 situé entre le déflecteur 47 et le plan d'appui 31.

Le corps 41 creux s'étend autour d'un axe géométrique AX qui peut être confondu avec l'axe de révolution AXM du maneton 22 et/ou avec le second axe de rotation AXROT2 en utilisation. Le corps 41 creux peut par exemple être cylindrique et l'espace intérieur du corps 41 creux peut également être cylindrique.

L'orifice d'entrée 44 est destiné à recevoir le premier flux 51 du liquide de lubrification provenant par exemple d'un premier point de projection 56 comme représenté sur la figure 2. Le premier flux 51 peut également être dirigé par gravité vers l'orifice d'entrée 44 du collecteur 40.

Le premier flux 51 du liquide de lubrification peut pénétrer dans le collecteur 40 et être dirigé, par exemple par l'effet de la gravité terrestre et/ou d'une force centrifuge générée par la rotation du maneton 22 autour du premier axe de rotation AXROT1, via l'orifice de sortie 45 et un ou plusieurs orifices radiaux 28 présents dans le maneton 22 vers le dispositif de guidage 35 lié au maneton 22. Ensuite, le liquide de lubrification s'écoule, après avoir traversé le dispositif de guidage 35, vers par exemple un réservoir, sous la forme d'un premier flux de retour 58.

Par ailleurs, l'épaulement 42 est lié au corps 41 et est muni d'une face d'appui 421. Cette face d'appui 421 est en appui sur une face externe du support 21 ou une face externe du maneton 22. Cette face d'appui 421 s'étend dans un plan d'appui 31 qui est par exemple perpendiculaire à l'axe géométrique AX. Selon le train épicycloïdal d'engrenages 10 représenté sur la figure 1, les manetons 22 et le support 21 forment une seule et même pièce. Alternativement, les manetons 22 et le support 21 peuvent être des pièces distinctes.

Selon l'exemple de collecteur 40 représenté sur la figure 1, le déflecteur 47 est en saillie radialement du corps 41 et de l'épaulement 42 en s'éloignant de l'axe géométrique AX. Le déflecteur 47 est selon cet exemple lié à l'épaulement 42. Lorsque le corps 41, le déflecteur 47 et de l'épaulement 42 sont de forme cylindrique à base circulaire, le déflecteur 47 a un diamètre extérieur supérieur au diamètre extérieur de l'épaulement 42 qui est lui-même supérieur au diamètre extérieur du corps 41.

L'espace de déviation 431 de ce collecteur 40 est alors fermé parallèlement à l'axe géométrique AX par le déflecteur 47 et la face externe du support 21 et/ou la face externe du maneton 22 présente dans le plan d'appui 31, et radialement par l'épaulement 42. Cet espace de déviation 431 est ouvert radialement vers l'extérieur en s'éloignant de l'axe géométrique AX.

Cet espace de déviation 431 reçoit ainsi le second flux 52 du liquide de lubrification, ce second flux 52 ayant traversé par exemple le dispositif de guidage principal 25 après avoir été distribué par un second point de projection 57. Le premier flux 51 et le second flux 52 du liquide de lubrification sont de fait distincts. La barrière 43 permet alors de dévier ce second flux 52, évitant que ce second flux 52 ne rentre dans le corps 41 creux. Le liquide de lubrification peut alors s'écouler vers par exemple un réservoir sous la forme d'un second flux de retour, sans être rentré dans le maneton 22, ni avoir traversé le dispositif de guidage 35.

Le dispositif de guidage 35 a ainsi été lubrifié uniquement par le premier flux 51 qui est propre car provenant directement du premier point de projection 56. Le second flux 52 qui a pu éventuellement être pollué par des particules étrangères, par exemple métalliques en traversant le dispositif de guidage principal 25 est ainsi évacué sans risque de traverser un autre dispositif de guidage par exemple.

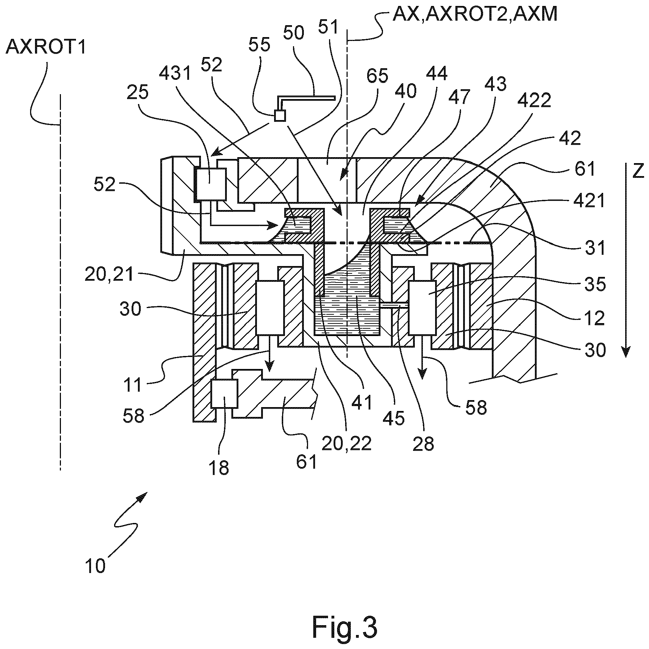

[Fig 3] La figure 3 représente un autre exemple d'un train épicycloïdal d'engrenages 10 susceptible d'équiper une boîte de transmission de puissance 6. Selon cet exemple, le premier flux 51 et le second flux 52 du liquide de lubrification peuvent être distribués par un même dispositif de projection 55 du système de lubrification 50. Dans ce cas, le dispositif de projection 55 est positionné au-dessus du bâti 61 pour pouvoir diriger le second flux 52 du liquide de lubrification en direction du dispositif de guidage principal 25.

Le terme « au-dessus » s'entend, de même que les termes « sous » et « en dessous », par rapport au premier axe de rotation AXROT1 du train épicycloïdal d'engrenages 10 orienté du dispositif de guidage principal 25 vers l'autre dispositif de guidage 18. Ce premier axe de rotation AXROT1 peut être par exemple sensiblement parallèle à la direction Z de la gravité terrestre lorsque l'aéronef 1 est posé normalement sur un sol horizontal sur ses trains d'atterrissage. De même, le terme « verticale » s'entend selon ce premier axe de rotation AXROT1, à savoir sensiblement parallèlement à la direction Z de la gravité terrestre lorsque cet aéronef 1 est posé normalement au sol. En outre, les termes « supérieur » et « inférieur » s'entendent également par rapport à ce premier axe de rotation AXROT1 orienté du dispositif de guidage principal 25 vers l'autre dispositif de guidage 18.

Un ou plusieurs conduits 65 traversent le bâti 61 sensiblement verticalement entre le dispositif de projection 55 et chaque maneton 22 afin de diriger le premier flux 51 vers un collecteur 40 lors de la rotation du porte-satellites 20.

Le premier flux 51 du liquide de lubrification peut ainsi entrer dans le corps 41 creux du collecteur 40 par l'orifice d'entrée 44 et s'y accumuler pour être ensuite dirigé via l'orifice de sortie 45 et un ou plusieurs orifices radiaux 28 présents dans le maneton 22 vers le dispositif de guidage 35 lié au maneton 22. Ensuite, le liquide de lubrification s'écoule, après avoir traversé le dispositif de guidage 35, vers par exemple un réservoir, sous la forme d'un premier flux de retour 58.

Selon cet exemple, le déflecteur 47 du collecteur 40 est en saillie radialement du corps 41, mais a un même diamètre que l'épaulement 42. Le corps 41 se prolonge au-delà et au-dessus de l'épaulement 42 selon l'axe géométrique AX, jusqu'au déflecteur 47. Le déflecteur 47 est selon cet exemple lié au corps 41. La barrière 43 comporte ainsi une gorge délimitée par le déflecteur 47 et l'épaulement 42, le fond de cette gorge étant formé par le corps 41.

L'espace de déviation 431 de ce collecteur 40 est alors fermé parallèlement à l'axe géométrique AX d'une part par le déflecteur 47 et d'autre part par une face supérieure 422 de l'épaulement 42. Cet espace de déviation 431 est fermé radialement par la partie du corps 41 s'étendant au-dessus de l'épaulement 42, à l'extérieur du maneton 22 et est ouvert radialement vers l'extérieur en s'éloignant de l'axe géométrique AX.

Comme précédemment, l'espace de déviation 431 reçoit le second flux 52 du liquide de lubrification et le déflecteur 47 empêche que ce second flux 52 ne rentre dans le corps 41 creux. La barrière 43 permet de nouveau de dévier ce second flux 52 jusqu'à ce que le liquide de lubrification s'écoule vers par exemple un réservoir sous la forme d'un second flux de retour, sans être rentré dans le maneton 22, ni avoir traversé le dispositif de guidage 35.

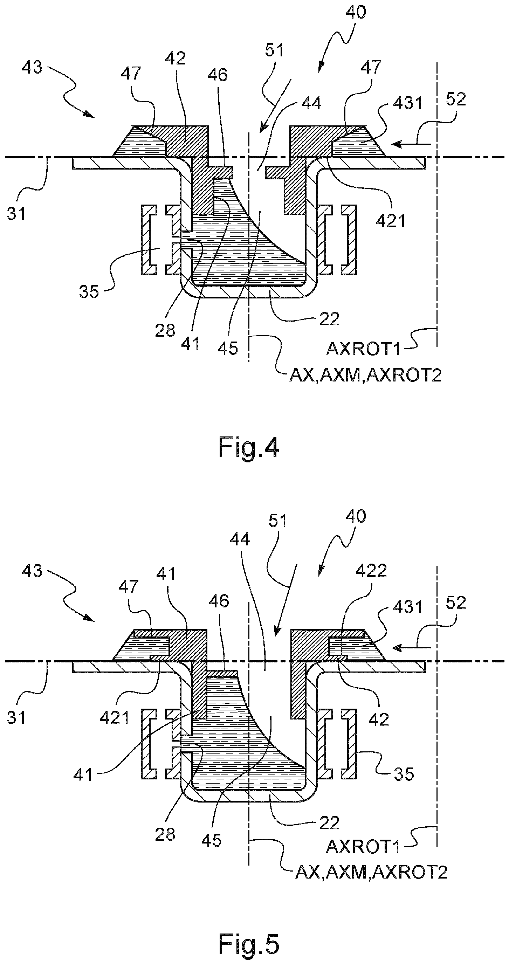

[Fig 4] Un autre exemple de collecteur 40 est représenté sur la figure 4. Seuls, le collecteur 44, le maneton 22 et le dispositif de guidage 35 sont représentés sur la figure 4 et les figures suivantes par souci de simplification de ces figures.

Selon cet exemple de collecteur 40, le déflecteur 47 est en saillie radialement du corps 41 et de l'épaulement 42. Le déflecteur 47 est selon cet exemple lié à l'épaulement 42. Le déflecteur 47 est incliné par rapport au plan d'appui 31. Le déflecteur est ainsi non parallèle au plan d'appui 31, et forme avec le plan d'appui 31 un angle de déflection par exemple compris entre 15° et 45°. Le déflecteur 47 peut être incliné par rapport au plan d'appui 31, indépendamment des autres caractéristiques du collecteur 40. Le déflecteur 47 peut notamment être incliné par rapport au plan d'appui 31 sur les exemples de collecteurs 40 précédemment décrits.

L'espace de déviation 431 de ce collecteur 40 est alors fermé parallèlement à l'axe géométrique AX par le déflecteur 47 et par la face externe du support 21 et/ou la face externe du maneton 22 présente dans le plan d'appui 31 ainsi que radialement par l'épaulement 42. Cet espace de déviation 431 est ouvert radialement vers l'extérieur en s'éloignant de l'axe géométrique AX.

Comme précédemment, l'espace de déviation 431 reçoit le second flux 52 du liquide de lubrification et le déflecteur 47 empêche que ce second flux 52 ne rentre dans le corps 41 creux. La barrière 43 permet de nouveau de dévier ce second flux 52 jusqu'à ce qu'il s'écoule vers par exemple un réservoir, sans être rentré dans le maneton 22, ni avoir traversé le dispositif de guidage 35.

De plus, ce collecteur 40 peut comporter à l'intérieur du corps 41 creux une paroi anti-refoulement 46 pour maintenir un volume du liquide de lubrification dans le corps 41 creux. Une paroi anti-refoulement 46 peut être agencée sur le collecteur 40, indépendamment des autres caractéristiques du collecteur 40. Une telle paroi anti-refoulement 46 peut notamment être intégrée sur les exemples de collecteurs 40 précédemment décrits. Selon cet exemple, la paroi anti-refoulement 46 est annulaire, centrée sur l'axe géométrique AX et liée à une paroi intérieure du corps 41. Une ouverture au centre de la paroi anti-refoulement 46 constitue l'orifice d'entrée 44 du collecteur 40.

La paroi anti-refoulement 46 permet d'éviter, ou au minimum de limiter, un refoulement du liquide de lubrification sous l'effet d'une force centrifuge générée par la rotation du porte-satellites 20 autour du premier axe de rotation AXROT1. Un volume minimum du liquide de lubrification est ainsi maintenu dans le corps 41 creux afin d'acheminer une quantité de liquide de lubrification suffisante vers le dispositif de guidage 35 via l'orifice de sortie 45 et le ou les orifices radiaux 28.

[Fig 5] La figure 5 représente un autre exemple de collecteur 40 pour lequel le déflecteur 47 est en saillie radialement du corps 41 et de l'épaulement 42. Le déflecteur 47 est selon cet exemple lié au corps 41. Le diamètre extérieur du déflecteur 47 est dans cet exemple supérieur aux diamètres extérieurs du corps 41 et l'épaulement 42. Le déflecteur 47 est selon cet exemple parallèle au plan d'appui 31.

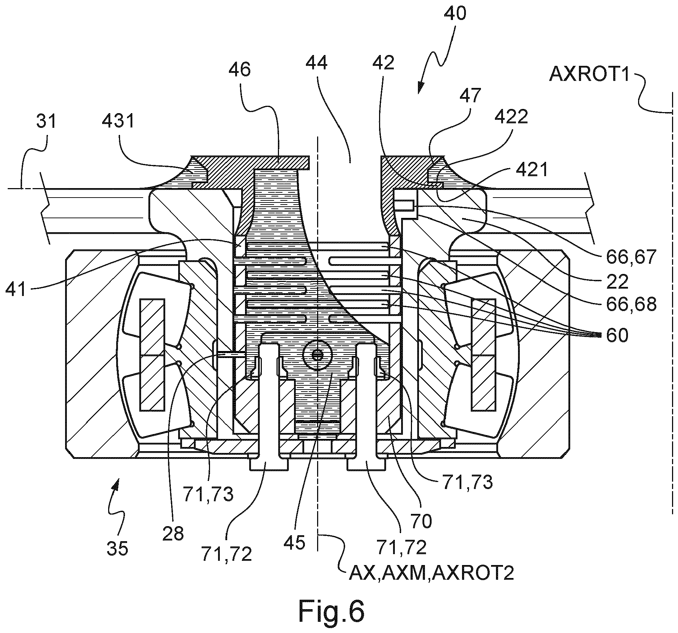

[Fig 6] La figure 6 représente un autre exemple de collecteur 40 pour lequel le déflecteur 47 est en saillie radialement du corps 41 et de l'épaulement 42. Le déflecteur 47 est selon cet exemple lié au corps 41. Le diamètre extérieur du déflecteur 47 est dans cet exemple supérieur aux diamètres extérieurs du corps 41 et de l'épaulement 42. Le déflecteur 47 est selon cet exemple non parallèle au plan d'appui 31 et donc incliné par rapport au plan d'appui 31.

De façon commune à ces deux exemples des figures 5 et 6, le corps 41 se prolonge au-delà et au dessus de l'épaulement 42 selon l'axe géométrique AX, jusqu'au déflecteur 47. La surface externe du corps 41 située à l'extérieur du maneton 22 a un diamètre supérieur à la surface externe du corps 41 positionnée à l'intérieur du maneton 22. La barrière 43 comporte ainsi une gorge délimitée par le déflecteur 47 et la face supérieure 422 de l'épaulement 42, le fond de cette gorge étant formé par le corps 41.

L'espace de déviation 431 pour ces deux derniers exemples est alors fermé parallèlement à l'axe géométrique AX d'une part par le déflecteur 47 et d'autre part par une face supérieure 422 de l'épaulement 42 et par la face externe du support 21 et/ou la face externe du maneton 22 présente dans le plan d'appui 31. Cet espace de déviation 431 est fermé radialement par la partie du corps 41 s'étendant au-delà de l'épaulement 42 à l'extérieur du maneton 22 et est ouvert radialement vers l'extérieur en s'éloignant de l'axe géométrique AX.

De façon commune à ces deux derniers exemples de collecteur 40 et comme précédemment, l'espace de déviation 431 reçoit le second flux 52 du liquide de lubrification et le déflecteur 47 empêche que ce second flux 52 ne rentre dans le corps 41 creux. La barrière 43 permet de nouveau de dévier ce second flux 52 jusqu'à ce qu'il s'écoule vers par exemple un réservoir, sans être rentré dans le maneton 22, ni avoir traversé le dispositif de guidage 35.

Les collecteurs 40 selon ces deux derniers exemples peuvent aussi comporter une paroi anti-refoulement 46 liée à une paroi intérieure du corps 41 creux. La paroi anti-refoulement 46 est asymétrique autour de l'axe géométrique AX et l'orifice d'entrée 44 est formé par une ouverture entre la paroi anti-refoulement 46 et la paroi intérieure du corps 41 creux. La paroi anti-refoulement 46 est positionnée par rapport à l'axe géométrique AX du côté opposé à la direction d'arrivée du second flux 52 sur le collecteur 40.

La position du collecteur 40 doit alors être indexée par rapport au maneton 22 pour maintenir la position de la paroi anti-refoulement 46 opposée à la direction d'arrivée du second flux 52 sur le collecteur 40 par rapport à l'axe géométrique AX. Dans ce but, le collecteur 40 et le maneton 22 peuvent comporter un dispositif d'indexage 66 permettant d'orienter précisément le collecteur 40 dans le maneton 22. Le dispositif d'indexage 66 est muni d'un pion 67 agencé sur le collecteur 40 et d'un logement 68 agencé dans le maneton 22. Alternativement, un pion 67 peut aussi être agencé sur le maneton 22, le collecteur 40 comportant un logement 68.

Indépendamment des autres caractéristiques du collecteur 40, la paroi anti-refoulement 46 peut être agencée parallèlement au plan d'appui 31 comme représentée sur les figures 4 à 6. Alternativement, la paroi anti-refoulement 46 peut être inclinée par rapport plan d'appui 31 et donc non parallèle au plan d'appui 31.

La paroi anti-refoulement 46 peut par exemple être agencée à l'intérieur du corps 41 creux comme représenté sur la figure 5. La paroi anti-refoulement 46 peut aussi être agencée à une extrémité du corps 41 creux comme représenté sur la figure 6.

La paroi anti-refoulement 46 permet de maintenir un volume minimum de liquide de lubrification dans le collecteur 40 et le maneton 22 quels que soient les mouvements du porte-satellites 20.

De plus, indépendamment des autres caractéristiques du collecteur 40, le corps 41 creux peut comporter, comme représenté sur la figure 6, des ouvertures de déformation 60 en forme de fentes agencées entre l'orifice d'entrée 44 et l'orifice de sortie 45. Le collecteur 40 comporte aussi au moins un support de fixation 70 lié au corps 41 et agencé en dessous du corps 41. Chaque support de fixation 70 permet de fixer le collecteur 40 au maneton 22 à l'aide d'au moins un dispositif de fixation 71, comportant par exemple une vis 72 et un écrou 73. Les ouvertures de déformation 60 sont par exemple agencées perpendiculairement à l'axe géométrique AX.

De la sorte, lors de la fixation du collecteur 40 avec le maneton 22 par l'intermédiaire du support de fixation 70 et d'au moins un dispositif de fixation 71, le collecteur 40 peut se déformer en traction selon l'axe géométrique AX grâce à la présence des ouvertures de déformation 60. En conséquence, la face d'appui 421 de l'épaulement 42 exerce une pression sur la face externe du maneton 22 et/ou la face externe du maneton 22 assurant une étanchéité suffisante entre d'une part le collecteur 40 et d'autre le maneton 20 ou le support 20 pour qu'aucune particule étrangère contenue dans le second flux 52 ne pénètre dans le maneton 22, voire que ce second flux 52 ne pénètre pas dans le maneton 22.

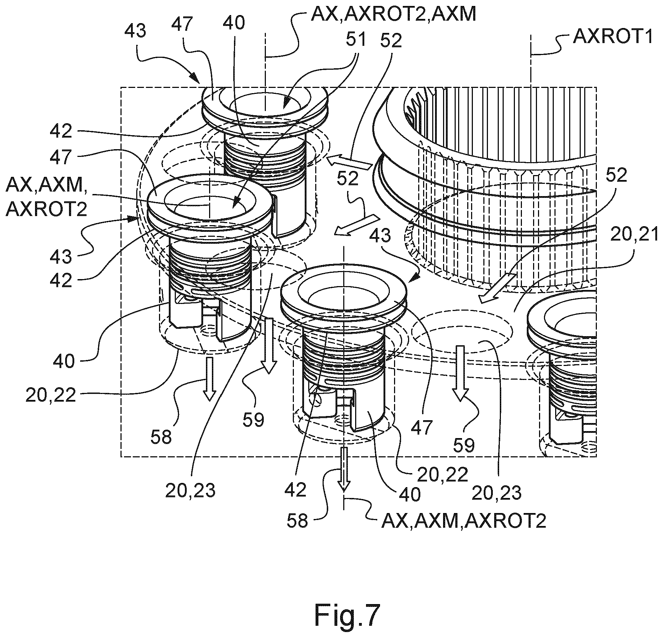

[Fig 7] La figure 7 représente une vue partielle en perspective d'un porte-satellites 20 portant des collecteurs 40. Le premier flux 51 et le second flux 52 sont représentés. Le premier flux 51 est dirigé vers chaque collecteur 40 puis s'écoule, après avoir traversé le dispositif de guidage 35 (non représenté), vers par exemple un réservoir, sous la forme du premier flux de retour 58. Le second flux 52 circule sur le support 21 du porte-satellite 20 après avoir traversé le dispositif de guidage principal 25 (non représenté) jusqu'au collecteur 40. La barrière 43 permet de dévier ce second flux 52 qui peut s'écouler au travers de trous 23 du support 21 vers par exemple un réservoir sous la forme du second flux de retour 59, sans être rentré dans le maneton 22, ni avoir traversé le dispositif de guidage 35 (non représenté). Le déflecteur 47 de chaque collecteur 40 est agencé sur la totalité de la périphérie du collecteur 40 selon l'exemple représenté. En conséquence, le déflecteur 47 et l'épaulement 42 ainsi que la barrière 43 sont de formes annulaires.

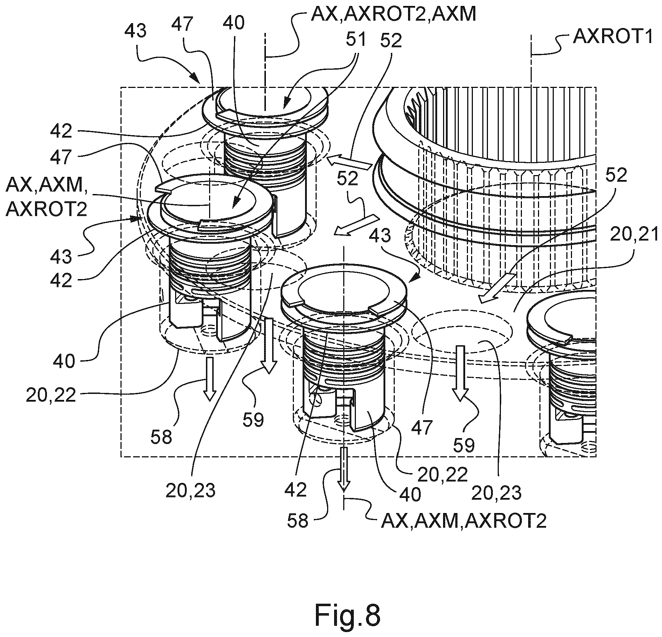

[Fig 8] La figure 8 représente une vue partielle en perspective d'un porte-satellites 20 portant d'autres collecteurs 40. Pour chaque collecteur 40, le déflecteur 47 couvre un angle supérieur ou égal à 100° autour de l'axe géométrique AX, par exemple égal à 270° autour de l'axe géométrique AX selon l'exemple représenté. Le déflecteur 47 de chaque collecteur 40 est centré sensiblement autour d'une direction reliant le premier axe de rotation AXROT1 et l'axe géométrique AX de ce collecteur 40, par exemple à l'aide d'un dispositif d'indexage 60.

Par ailleurs, les collecteurs 40 peuvent être intégrés au porte-satellites 20 au niveau de chaque maneton 22, formant ainsi une unique pièce.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention défini par les revendications.

## Revendications

1. Ensemble comportant un collecteur (40) de liquide de lubrification, un dispositif de guidage (35), un maneton (22) portant ledit dispositif de guidage (35) en rotation et un support (21) portant ledit maneton (22), ledit collecteur (40) étant configuré pour recevoir un premier flux (51) et un second flux (52) d'un liquide de lubrification, ledit premier flux (51) et ledit second flux (52) étant distincts,
ledit collecteur (40) comportant :
- un corps (41) creux autour d'un axe géométrique (AX) dudit collecteur (40) et muni de :
∘ un orifice d'entrée (44) configuré pour recevoir ledit premier flux (51) dudit liquide de lubrification,
∘ un orifice de sortie (45) configuré pour diriger ledit premier flux (51) vers ledit dispositif de guidage (35) lié audit maneton (22),
- une barrière (43) configurée pour dévier ledit second flux (52) dudit liquide de lubrification, ladite barrière (43) comportant :
∘ un épaulement (42) lié audit corps (41) et muni d'une face d'appui (421), ladite face d'appui (421) étant en appui contre une face externe dudit maneton (22) ou bien contre une face externe dudit support (21) portant ledit maneton (22), ladite face d'appui (421) s'étendant dans un plan d'appui (31), et
∘ un déflecteur (47) situé d'un côté opposé audit orifice de sortie (45) par rapport audit plan d'appui (31), ledit déflecteur (47) étant localement en saillie radialement dudit corps (41) en s'éloignant dudit axe géométrique (AX),
**caractérisé en ce que** ledit collecteur (40) comporte un espace de déviation (431) dudit second flux (52) situé entre ledit déflecteur (47) et ledit plan d'appui (31), et ledit déflecteur (47) couvre un angle supérieur ou égal à 100° autour dudit axe géométrique (AX).

2. Ensemble selon la revendication 1,
**caractérisé en ce que** ledit déflecteur (47) couvre un angle supérieur ou égal à 270° autour dudit axe géométrique (AX).

3. Ensemble selon l'une quelconque des revendications 1 à 2, **caractérisé en ce que** ledit plan d'appui (31) est perpendiculaire audit axe géométrique (AX).

4. Ensemble selon l'une quelconque des revendications 1 à 3,
**caractérisé en ce que** ledit déflecteur (47) est parallèle audit plan d'appui (31).

5. Ensemble selon l'une quelconque des revendications 1 à 3,
**caractérisé en ce que** ledit déflecteur (47) est incliné par rapport audit plan d'appui (31).

6. Ensemble selon l'une quelconque des revendications 1 à 5,
**caractérisé en ce que** ledit espace de déviation (431) est limité selon une direction parallèle audit axe géométrique (AX) d'une part par ledit déflecteur (47) et d'autre part par le plan d'appui (31) et radialement par ledit épaulement (42) en direction dudit axe géométrique (AX), ledit espace de déviation (431) étant ouvert radialement vers l'extérieur en s'éloignant dudit axe géométrique (AX).

7. Ensemble selon l'une quelconque des revendications 1 à 5, **caractérisé en ce que** ledit espace de déviation (431) est limité selon une direction parallèle audit axe géométrique (AX) d'une part par ledit déflecteur (47) et d'autre part par ledit épaulement (42) et radialement par ledit épaulement (42) et/ou ledit corps (41) en direction dudit axe géométrique (AX), ledit espace de déviation (431) étant ouvert radialement vers l'extérieur en s'éloignant dudit axe géométrique (AX).

8. Ensemble selon l'une quelconque des revendications 1 à 7,
**caractérisé en ce que** ledit collecteur (40) comporte une paroi anti-refoulement (46) pour maintenir un volume du liquide de lubrification dans ledit corps (41) creux.

9. Ensemble selon l'une quelconque des revendications 1 à 8,
**caractérisé en ce que** ledit corps (41) creux comporte des ouvertures de déformation (60) en forme de fentes agencées entre ledit orifice d'entrée (44) et ledit orifice de sortie (45), ledit collecteur (40) comportant au moins un support de fixation (70) fixant ledit collecteur (40) audit maneton (22) à l'aide d'au moins un dispositif de fixation (71).

10. Train épicycloïdal d'engrenages (10) comportant un porte-satellites (20) et plusieurs roues-satellites (30) dentées portées par ledit porte-satellites (20), le porte-satellites (20) comportant ledit support (21),
**caractérisé en ce que** ledit train épicycloïdal d'engrenages (10) comporte plusieurs ensembles selon l'une quelconque des revendications 1 à 9, lesdits manetons (22) étant portés par ledit support (21), chaque roue-satellite (30) ayant des dents agencées autour d'un maneton (22), ledit train épicycloïdal d'engrenages (10) comportant des dispositifs de guidage (35) en rotation desdites roues-satellites (30) par rapport auxdits manetons (22), ladite face d'appui (421) de chaque collecteur (40) étant en appui sur une face externe dudit support (21) ou une face externe dudit maneton (22) dans lequel est agencé ledit collecteur (40).

11. Train épicycloïdal d'engrenages selon la revendication 10, **caractérisé en ce que** ledit déflecteur (43) de chaque collecteur (40) couvrant un angle strictement inférieur à 360° autour dudit axe géométrique (AX), chaque collecteur (40) est agencé dans un maneton (22) de sorte que ledit déflecteur (43) couvre un angle supérieur ou égal à 50° de part et d'autre d'une ligne reliant ledit axe géométrique (AX) et un axe de rotation (AXROT) dudit porte-satellite (20).

12. Boîte de transmission de puissance (6) comportant un train épicycloïdal d'engrenages (10) et un système de lubrification (50), **caractérisée en ce que** ledit train épicycloïdal d'engrenages (10) est selon l'une quelconque des revendications 10 à 11.

13. Boîte de transmission de puissance (6) selon la revendication 12, **caractérisée en ce que** ladite boîte de transmission de puissance (6) comporte un bâti (61), ledit bâti (61) comportant un conduit (65) configuré pour acheminer ledit premier flux (51) dudit liquide de lubrification à travers dudit conduit (65) en direction desdits collecteurs (40) lors d'une rotation dudit porte-satellites (20).

14. Aéronef (1),
**caractérisé en ce que** ledit aéronef (1) comporte une boîte de transmission de puissance (6) selon l'une quelconque des revendications 12 à 13.

## Patentansprüche

1. Baugruppe mit einem Sammler (40) für Schmierflüssigkeit, einer Führungsvorrichtung (35), einem Kurbelzapfen (22), der die Führungsvorrichtung (35) drehbar trägt, und einem Träger (21), der den Kurbelzapfen (22) trägt, wobei der Sammler (40) konfiguriert ist, um einen ersten Strom (51) und einen zweiten Strom (52) einer Schmierflüssigkeit aufzunehmen, wobei der erste Strom (51) und der zweite Strom (52) unterschiedlich sind, wobei der Verteiler (40) umfasst :
- einen Körper (41), der um eine geometrische Achse (AX) des Sammlers (40) hohl ist und versehen ist mit:
einer Einlassöffnung (44), die konfiguriert ist, um den ersten Strom (51) der Schmierflüssigkeit aufzunehmen,
einer Austrittsöffnung (45), die konfiguriert ist, um den ersten Strom (51) zu der mit dem Kurbelzapfen (22) verbundenen Führungsvorrichtung (35) zu leiten,
- eine Barriere (43), die konfiguriert ist, um den zweiten Strom (52) der Schmierflüssigkeit abzulenken, wobei die Barriere (43) umfasst:
eine Schulter (42), die mit dem Körper (41) verbunden und mit einer Auflagefläche (421) versehen ist, wobei die Auflagefläche (421) an einer Außenfläche des Kurbelzapfens (22) oder an einer Außenfläche des den Kurbelzapfen (22) tragenden Trägers (21) anliegt, wobei sich die Auflagefläche (421) in einer Auflageebene (31) erstreckt, und
einen Deflektor (47), der auf einer der Austrittsöffnung (45) gegenüberliegenden Seite bezüglich der Auflageebene (31) angeordnet ist, wobei der Deflektor (47) lokal radial von dem Körper (41) weg von der geometrischen Achse (AX) vorsteht,
**dadurch gekennzeichnet, dass** der Sammler (40) einen Umlenkraum (431) für den zweiten Strom (52) aufweist, der sich zwischen dem Deflektor (47) und der Auflageebene (31) befindet, und der Deflektor (47) einen Winkel von größer oder gleich 100° um die geometrische Achse (AX) abdeckt.

2. Baugruppe nach Anspruch 1,
**dadurch gekennzeichnet, dass** der Deflektor (47) einen Winkel von größer oder gleich 270° um die geometrische Achse (AX) abdeckt.

3. Baugruppe nach einem der Ansprüche 1 bis 2,
**dadurch gekennzeichnet, dass** die Auflageebene (31) senkrecht zu der geometrischen Achse (AX) ist.

4. Baugruppe nach einem der Ansprüche 1 bis 3,
**dadurch gekennzeichnet, dass** der Deflektor (47) parallel zu der Auflageebene (31) ist.

5. Baugruppe nach einem der Ansprüche 1 bis 3,
**dadurch gekennzeichnet, dass** der Deflektor (47) in Bezug auf die Auflageebene (31) geneigt ist.

6. Baugruppe nach einem der Ansprüche 1 bis 5,
**dadurch gekennzeichnet, dass** der Umlenkraum (431) in einer Richtung parallel zur geometrischen Achse (AX) einerseits durch den Deflektor (47) und andererseits durch die Auflageebene (31) und radial zur geometrischen Achse (AX) hin durch die Schulter (42) begrenzt ist, wobei der Umlenkraum (431) radial nach außen, von der geometrischen Achse (AX) weg, offen ist.

7. Baugruppe nach einem der Ansprüche 1 bis 5,
**dadurch gekennzeichnet, dass** der Umlenkraum (431) in einer Richtung parallel zur geometrischen Achse (AX) einerseits durch den Deflektor (47) und andererseits durch die Schulter (42) und radial zur geometrischen Achse (AX) hin durch die Schulter (42) und/oder den Körper (41) begrenzt ist, wobei der Umlenkraum (431) radial nach außen, von der geometrischen Achse (AX) weg, offen ist.

8. Baugruppe nach einem der Ansprüche 1 bis 7,
**dadurch gekennzeichnet, dass** der Verteiler (40) eine Rückflussverhinderungswand (46) aufweist, um ein Volumen der Schmierflüssigkeit in dem Hohlkörper (41) zurückzuhalten.

9. Baugruppe nach einem der Ansprüche 1 bis 8,
**dadurch gekennzeichnet, dass** der hohle Körper (41) schlitzförmige Verformungsöffnungen (60) aufweist, die zwischen der Einlassöffnung (44) und der Auslassöffnung (45) angeordnet sind, wobei der Verteiler (40) mindestens eine Befestigungshalterung (70) aufweist, die den Verteiler (40) an dem Kurbelzapfen (22) mit Hilfe mindestens einer Befestigungsvorrichtung (71) sichert.

10. Planetengetriebe (10) mit einem Planetenträger (20) und mehreren von dem Planetenträger (20) getragenen Planetenzahnrädern (30), wobei der Planetenträger (20) den Träger (21) umfasst,
**dadurch gekennzeichnet, dass** das Planetengetriebe (10) mehrere Baugruppen nach einem der Ansprüche 1 bis 9 umfasst, wobei die Kurbelzapfen (22) von dem Träger (21) getragen sind, wobei jedes Planetenzahnrad (30) um einen Kurbelzapfen (22) herum angeordnete Zähne hat, das Planetengetriebe (10) Führungsvorrichtungen (35) für die Drehung der Planetenräder (30) in Bezug auf die Kurbelzapfen (22) umfasst, wobei die Auflagefläche (421) jedes Sammlers (40) auf einer Außenfläche des Trägers (21) oder einer Außenfläche des Kurbelzapfens (22), in dem der Sammler (40) angeordnet ist, aufliegt.

11. Planetengetriebe nach Anspruch 10,
**dadurch gekennzeichnet, dass** der Deflektor (43) jedes Sammlers (40) einen Winkel von strikt weniger als 360° um die geometrische Achse (AX) abdeckt, und dass jeder Sammler (40) in einem Kurbelzapfen (22) so angeordnet ist, dass der Deflektor (43) einen Winkel von größer oder gleich 50° auf beiden Seiten einer Linie abdeckt, die die geometrische Achse (AX) und eine Drehachse (AXROT) des Planetenträgers (20) verbindet.

12. Leistungsgetriebe (6) mit einem Planetenradsatz (10) und einem Schmiersystem (50),
**dadurch gekennzeichnet, dass** der Planetenradsatz (10) gemäß einem der Ansprüche 10 bis 11 ist.

13. Leistungsgetriebe (6) nach Anspruch 12,
**dadurch gekennzeichnet, dass** das Leistungsgetriebe (6) einen Rahmen (61) aufweist, wobei der Rahmen (61) eine Leitung (65) aufweist, die konfiguriert ist, um den ersten Strom (51) der Schmierflüssigkeit durch die Leitung (65) zu den Sammelleitungen (40) zu führen, wenn sich der Planetenträger (20) dreht.

14. Luftfahrzeug (1),
**dadurch gekennzeichnet, dass** das Luftfahrzeug (1) ein Leistungsgetriebe (6) nach einem der Ansprüche 12 bis 13 aufweist.

## Claims

1. Assembly comprising a lubricating liquid manifold (40), a guide device (35), a crankpin (22) carrying said rotational guide device (35) and a support (21) carrying said crankpin (22), said manifold (40) being configured to receive a first flow (51) and a second flow (52) of a lubricating liquid, said first flow (51) and said second flow (52) being separate,
said manifold (40) comprising:
• a hollow body (41) around a geometric axis (AX) of said manifold (40) and provided with:
∘ an inlet port (44) configured to receive said first flow (51) of said lubricating liquid,
∘ an outlet port (45) configured to convey said first flow (51) towards said guide device (35) connected to said crankpin (22),
• a barrier (43) configured to divert said second flow (52) of said lubricating liquid, said barrier (43) comprising:
∘ a shoulder (42) connected to said body (41) and provided with a bearing face (421), said bearing face (421) being supported against an outer face of said crankpin (22) or against an outer face of said support (21) carrying said crankpin (22), said bearing face (421) extending in a bearing plane (31), and
∘ a deflector (47) situated on an opposite side to said outlet port (45) in relation to said bearing plane (31), said deflector (47) protruding radially outwards from said body (41) locally, moving away from said geometric axis (AX),
**characterized in that** said manifold (40) comprises a diversion space (431) for said second flow (52) situated between said deflector (47) and said bearing plane (31), and said deflector (47) covers an angle greater than, or equal to, 100° around said geometric axis (AX).

2. Assembly according to Claim 1,
**characterized in that** said deflector (47) covers an angle greater than, or equal to, 270° around said geometric axis (AX).

3. Assembly according to any one of Claims 1 to 2, **characterized in that** said bearing plane (31) is perpendicular to said geometric axis (AX).

4. Assembly according to any one of Claims 1 to 3, **characterized in that** said deflector (47) is parallel to said bearing plane (31).

5. Assembly according to any one of Claims 1 to 3, **characterized in that** said deflector (47) is inclined in relation to said bearing plane (31).

6. Assembly according to any one of Claims 1 to 5, **characterized in that** said diversion space (431) is limited in a direction parallel to said geometric axis (AX) by said deflector (47), on the one hand, and by the bearing plane (31), on the other hand, and radially by said shoulder (42) towards said geometric axis (AX), said diversion space (431) being open radially towards the outside, moving away from said geometric axis (AX).

7. Assembly according to any one of Claims 1 to 5, **characterized in that** said diversion space (431) is limited in a direction parallel to said geometric axis (AX) by said deflector (47), on the one hand, and by said shoulder (42), on the other, and radially by said shoulder (42) and/or said body (41) towards said geometric axis (AX), said diversion space (431) being open radially towards the outside, moving away from said geometric axis (AX).

8. Assembly according to any one of Claims 1 to 7, **characterized in that** said manifold (40) includes a backflow prevention wall (46) for keeping a volume of the lubricating liquid in said hollow body (41).

9. Assembly according to any one of Claims 1 to 8, **characterized in that** said hollow body (41) comprises deformation openings (60) in the form of slots arranged between said inlet port (44) and said outlet port (45), said manifold (40) comprising at least one fastening support (70) attaching said manifold (40) to said crankpin (22) by means of at least one fastening device (71).

10. Epicyclic gear train (10) comprising a planet carrier (20) and several toothed planet gears (30) carried by said planet carrier (20), the planet carrier (20) comprising said support (21), **characterized in that** said epicyclic gear train (10) includes several assemblies according to any one of Claims 1 to 9, said crankpins (22) being carried by said support (21), each planet gear (30) having teeth arranged around a crankpin (22), said epicyclic gear train (10) including rotational guide devices (35) for the rotation of said planet gears (30) in relation to said crankpins (22), said bearing face (421) of each manifold (40) being supported on an outer face of said support (21) or an outer face of said crankpin (22) in which said manifold (40) is arranged.

11. Epicyclic gear train according to Claim 10, **characterized in that** said deflector (43) of each manifold (40) covers an angle strictly less than 360° around said geometric axis (AX), each manifold (40) being arranged in a crankpin (22) such that said deflector (43) covers an angle greater than, or equal to, 50° on either side of a line connecting said geometric axis (AX) and an axis of rotation (AXROT) of said planet carrier (20).

12. Gearbox (6) comprising an epicyclic gear train (10) and a lubrication system (50), **characterized in that** said epicyclic gear train (10) is according to any one of Claims 10 to 11.

13. Gearbox (6) according to Claim 12, **characterized in that** said gearbox (6) includes a frame (61), said frame (61) comprising a duct (65) configured to convey said first flow (51) of said lubricating liquid through said duct (65) towards said manifolds (40) during a rotation of said planet carrier (20).

14. Aircraft (1),
**characterized in that** said aircraft (1) comprises a gearbox (6) according to any one of Claims 12 to 13.
